(19) Europäisches Patentamt
European Patent Office
Office européen des brevets

(11) **EP 4 604 210 A1**

(12) # EUROPEAN PATENT APPLICATION
published in accordance with Art. 153(4) EPC

(43) Date of publication:
**20.08.2025 Bulletin 2025/34**

(21) Application number: **23929477.0**

(22) Date of filing: **31.03.2023**

(51) International Patent Classification (IPC):
***H01M 4/38*** *(2006.01)* ***H01M 4/48*** *(2010.01)*
***H01M 4/62*** *(2006.01)* ***H01M 10/0567*** *(2010.01)*
***H01M 10/0568*** *(2010.01)*

(52) Cooperative Patent Classification (CPC):
**H01M 4/38; H01M 4/48; H01M 4/62;**
**H01M 10/0567; H01M 10/0568;** Y02E 60/10

(86) International application number:
**PCT/CN2023/085695**

(87) International publication number:
**WO 2024/197894 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Ningbo**
  **Ningde, Fujian 352100 (CN)**
- **LIU, Jing**
  **Ningde, Fujian 352100 (CN)**
- **CHEN, Peipei**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **SECONDARY BATTERY AND ELECTRIC DEVICE**

(57) A secondary battery, which comprises: a negative electrode sheet and an electrolyte, wherein the negative electrode sheet comprises a silicon-carbon composite material having a three-dimensional network crosslinked pore structure; and the electrolyte comprises a first component, the first component comprising one or more of compounds represented by formula (I) and formula (II). The structural formula of formula (I) or formula (II) is shown below, wherein R1, R2, R3 and R4 comprise at least one of a hydrogen atom, a fluorine atom and a fluorine-substituted or unsubstituted C1-C4 alkyl, and formula I contains fluorine. By means of the cooperation of the three-dimensional network crosslinked pore structure of the silicon-carbon composite material and the first component of the electrolyte, the volume effect of an active material during a charging and discharging process is inhibited, the internal resistance of the battery is reduced, and the cycle capacity retention rate of the battery is improved.

1

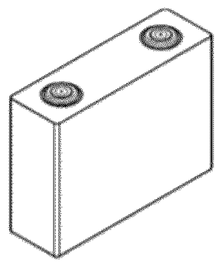

FIG. 1



Processed by Luminess, 75001 PARIS (FR)

**Description**

## TECHNICAL FIELD

This application relates to the technical field of secondary batteries, and in particular, to a secondary battery and a power consuming apparatus.

## BACKGROUND

In recent years, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace.

An electrode active material with a high capacity per gram usually has poor cycle performance. How to improve energy density of a battery through coordination of components of the battery and give consideration to excellent cycle performance is a technical problem urgently to be resolved in the art.

## SUMMARY

This application is disclosed in view of the foregoing issue, and an objective of this application is to provide a secondary battery. Cooperation of an electrolyte solution and a negative electrode material reduces internal resistance of the battery, and increases a cycle capacity retention rate of the battery.

A first aspect of this application provides a secondary battery, including: a negative electrode plate and an electrolyte solution. The negative electrode plate includes a silicon-carbon composite material having a three-dimensional cross-linked pore network structure. The electrolyte solution includes a first component, and the first component includes one or more of compounds represented by Formula I and Formula II,

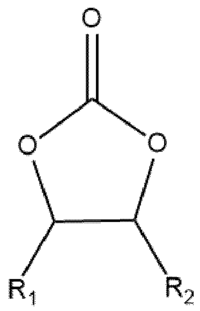
Formula I

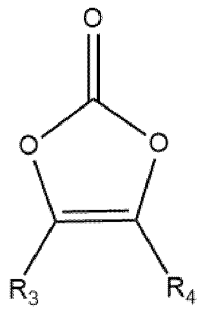
Formula II

$R_1$, $R_2$, $R_3$, and $R_4$ including at least one of a hydrogen atom, a fluorine atom, and a fluorine-substituted or fluorine-unsubstituted $C_1$-$C_4$ alkyl group, and Formula I including fluorine element.

The silicon-carbon composite material having the three-dimensional cross-linked pore network structure has a stable porous framework and good mechanical strength, and can have high loading of silicon and effectively reduce volume changes of silicon during charging/discharging. In addition, the first component in the electrolyte solution has an electron-withdrawing group F or an electron-rich double bond structure. This can further facilitate cyclic radical polymerization or ring-opening polymerization of a cyclic structure of the first component, and form a solid electrolyte interphase film (SEI film) on a silicon-based material in time, so that damage to an interphase structure caused by a volume effect of silicon during charging/discharging is inhibited, interphase resistance is reduced, and cycle stability of the battery is improved.

In any embodiment, a specific surface area of the silicon-carbon composite material is SSA $m^2/g$; a mass fraction of the first component is EL g/g based on a total mass of the electrolyte solution; and EL:SSA ranges from 0.005 to 0.4, and optionally ranges from 0.014 to 0.2.

When the ratio EL:SSA of the mass fraction of the first component in the electrolyte solution to the specific surface area SSA of the silicon-carbon composite material satisfies the foregoing range, the first component can be effectively intercalated in the pore structure of the silicon-carbon composite material to be in sufficient contact with the silicon-carbon composite material, so that an ion migration rate at an electrode/electrolyte interphase is improved, internal resistance of the battery is reduced, and a cycle capacity retention rate of the battery is increased.

In any embodiment, a mass fraction of the first component is EL g/g based on a total mass of the electrolyte solution;

in an outer peripheral region of the silicon-carbon composite material, a mass percentage of silicon element in the

silicon-carbon composite material relative to a total mass of the silicon-carbon composite material is B1, where the outer peripheral region of the silicon-carbon composite material is a region extending from an outer surface of the silicon-carbon composite material to an inner portion of the silicon-carbon composite material by a distance less than r/2, and r represents a short diameter of the silicon-carbon composite material; and

EL:B1 ranges from 0.01 to 2, and optionally ranges from 0.15 to 1.2.

When the ratio of the mass fraction of the first component in the electrolyte solution to the mass percentage B1 of silicon element in the silicon-carbon composite material relative to the total mass of the silicon-carbon composite material satisfies the foregoing range, volume expansion of silicon during charging/discharging is alleviated, and structural stability of the silicon-carbon composite material is improved, thereby improving cycle stability of the battery.

In any embodiment, a total pore volume of pores that are in the silicon-carbon composite material and whose pore sizes are greater than 100 nm is V1 $cm^3/g$, and a ratio EL:V1 of the mass fraction EL of the first component in the electrolyte solution to the total pore volume V1 of the pores that are in the silicon-carbon composite material and whose pore sizes are greater than 100 nm ranges from 10 to 500, and preferably ranges from 20 to 300.

When the ratio EL:V1 of the mass fraction EL of the first component in the electrolyte solution to the total pore volume V1 of the pores that are in the silicon-carbon composite material and whose pore sizes are greater than 100 nm satisfies the foregoing range, the first component may be smoothly intercalated in the pore structure of the silicon-carbon composite material to be in cooperation with the silicon-carbon composite material, to further improve an ion migration rate in an electrode active material, reduce the internal resistance of the battery, and increase the cycle capacity retention rate of the battery.

In any embodiment, the compound shown in Formula I includes one or more of the following compounds:

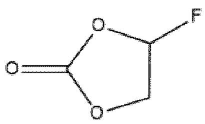, 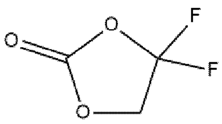, 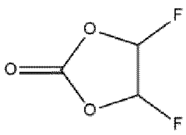, 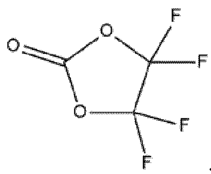, 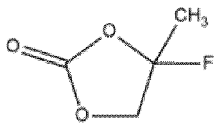,

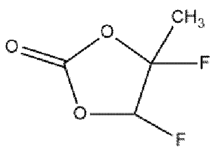, 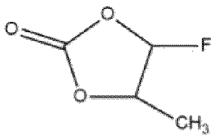, 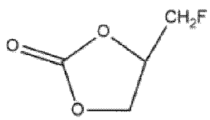, 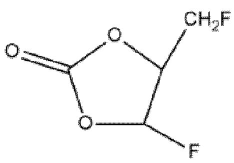,

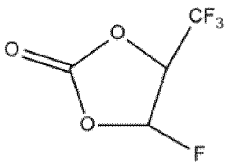, and 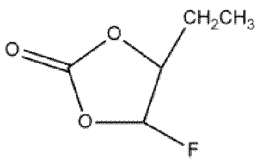;

and

the compound shown in Formula II includes one or more of the following compounds:

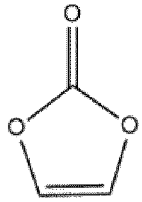, 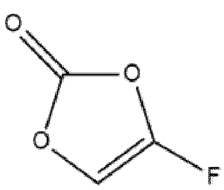, 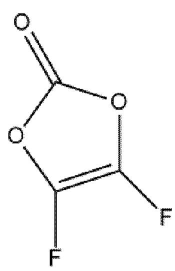, 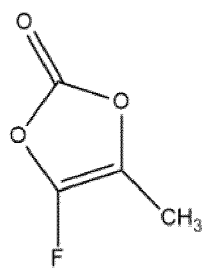, 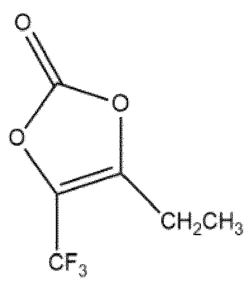,

and

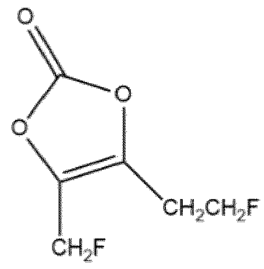

The compounds shown in Formula I and the compounds shown in Formula II have electron-withdrawing groups F or electron-rich double bond structures. This can further facilitate cyclic radical polymerization or ring-opening polymerization of cyclic structures of the compounds, so that the damage to the interphase structure caused by the volume effect of silicon during charging/discharging is inhibited, and the cycle stability is improved.

In any embodiment, in the outer peripheral region of the silicon-carbon composite material, a mass percentage A1 of carbon element in the silicon-carbon composite material relative to the total mass of the silicon-carbon composite material and the mass percentage B1 of silicon element in the silicon-carbon composite material relative to the total mass of the silicon-carbon composite material satisfy $0.8 \leq B1/A1 \leq 2.5$, and optionally satisfy $1 \leq B1/A1 \leq 1.5$.

In the outer peripheral region of the silicon-carbon composite material, when the mass percentage A1 of carbon element in the silicon-carbon composite material relative to the total mass of the silicon-carbon composite material and the mass percentage B1 of silicon element in the silicon-carbon composite material relative to the total mass of the silicon-carbon composite material satisfy the foregoing range, mass of silicon in the pore structure of the silicon-carbon composite material is high. This can significantly increase a capacity of a negative electrode active material. In addition, a voltage at which metal ions are intercalated is low. This facilitates intercalation of the metal ions. In this way, rate cycle performance of the secondary battery is improved. In addition, the three-dimensional cross-linked pore network structure can inhibit volume expansion of silicon during cycling, and improve structural stability of the negative electrode active material, to improving cycle performance of the battery.

In any embodiment, a mass percentage A of carbon element in the silicon-carbon composite material relative to the total mass of the silicon-carbon composite material tends to be decreased in a direction from a geometric center of the silicon-carbon composite material to the outer surface of the silicon-carbon composite material, and a mass percentage B of silicon element in the silicon-carbon composite material relative to the total mass of the silicon-carbon composite material tends to be increased in the direction from the geometric center of the silicon-carbon composite material to the outer surface of the silicon-carbon composite material.

For example, the silicon-carbon composite material may be in irregular shape, and therefore, the geometric center of the silicon-carbon composite material may be a geometric center of a cuboid tangent to the silicon-carbon composite material. In the direction from the geometric center of the silicon-carbon composite material to the outer surface of the silicon-carbon composite material, the mass percentage A of carbon element is gradually decreased, and the mass percentage B of silicon element is gradually increased, and silicon content in the pore structure of the silicon-carbon composite material is gradually increased. The silicon content is high, so that the capacity of the negative electrode active material can be significantly increased.

In any embodiment, the specific surface area SSA of the silicon-carbon composite material satisfies $2\ m^2/g \leq SSA \leq 10\ m^2/g$, and optionally satisfies $3\ m^2/g \leq SSA \leq 7\ m^2/g$.

When the specific surface area SSA of the silicon-carbon composite material satisfies the foregoing range, the specific surface area of the silicon-carbon composite material is large, and dynamic performance of the material is good, so that initial coulombic efficiency of the battery is improved.

In any embodiment, the silicon-carbon composite material includes a carbon matrix particle and a silicon nanoparticle. The carbon matrix particle includes a three-dimensional cross-linked pore network structure. The silicon nanoparticle is at least partially arranged in the three-dimensional cross-linked pore network structure.

The carbon matrix particle in this application has a stable porous framework structure and a strong support capability. To be specific, the carbon matrix particle has a high stress capability and excellent mechanical properties and electrical conductivity. The carbon matrix particle has the three-dimensional cross-linked pore network structure, so that there is a large amount of space for intercalation of silicon matrix nanoparticles, and a large amount of silicon can be stored, to effectively increase loading of silicon in the silicon-carbon composite material. After the carbon matrix particle is composited with the silicon matrix nanoparticle, electrical conductivity of the silicon-carbon composite material can be improved, the volume effect of silicon during lithium deintercalation can be alleviated, and a stress change of the silicon matrix nanoparticle can be fully withstood, thereby ensuring the structural stability of the silicon-carbon composite material, and improving cycle stability and a lithium storage capability of the silicon-carbon composite material. Therefore, when used in the secondary battery, the silicon-carbon composite material can improve cycle performance and energy

density of the secondary battery.

In any embodiment, the silicon nanoparticle includes one or more of a silicon-oxide compound, a prelithiated silicon-oxide compound, amorphous silicon, crystalline silicon, and a silicon-carbon composite, and optionally includes amorphous silicon.

In any embodiment, the carbon matrix includes one or more of graphite, soft carbon, and hard carbon.

In any embodiment, a mass percentage of the silicon nanoparticle in the silicon-carbon composite material is greater than or equal to 40%, and optionally ranges from 40% to 60%.

The negative electrode material used in the secondary battery in this application uses a carbon-based material having a three-dimensional cross-linked pore network structure to achieve high loading of silicon nanoparticles in the negative electrode material, so that the silicon-carbon composite material has a high capacity, and the energy density of the battery can be further improved.

In any embodiment, a ratio of powder compaction density P11 g/cm$^3$ of the silicon-carbon composite material tested after powder compaction once under an action force of 20000 N to powder compaction density P21 g/cm$^3$ of the silicon-carbon composite material tested after powder compaction for 20 times under the action force of 20000 N satisfies $1.00<P21/P11\leq1.20$, and optionally satisfies $1.02\leq P21/P11\leq1.10$.

When the ratio P21/P11 satisfies the foregoing range, the silicon-carbon composite material has a high capacity per gram and has good stress resistance, to improve structural stability of a negative electrode film layer, so that the secondary battery including the material gives consideration to good cycle performance while having high energy density.

In any embodiment, the powder compaction density P11 g/cm$^3$ of the silicon-carbon composite material tested after powder compaction once under the action force of 20000 N satisfies $1.10\leq P11\leq1.40$, and optionally satisfies $1.12\leq P11\leq1.35$.

When the powder compaction density P11 g/cm$^3$ of the silicon-carbon composite material tested after powder compaction once under the action force of 20000 N satisfies the foregoing range, the negative electrode film layer has high compaction density, so that the secondary battery has high energy density.

In any embodiment, the secondary battery includes at least one of a lithium-ion battery, a sodium-ion battery, a magnesium-ion battery, and a potassium-ion battery.

A second aspect of this application provides a power consuming apparatus, including the secondary battery according to the first aspect.

## BRIEF DESCRIPTION OF THE DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a power consuming apparatus using a secondary battery as a power supply according to an embodiment of this application.

Reference numerals:
1 - secondary battery; 11 - housing; 12 - electrode assembly; and 13 - cover plate.

## DETAILED DESCRIPTION

Embodiments of a binder, a preparation method, an electrode, a battery, and a power consuming apparatus are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application,

unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

With expansion of the scope of application of a secondary battery, requirements on performance such as energy density of the secondary battery are increasingly high. A silicon-based material has a high capacity per gram, and is a negative electrode material applicable to a high energy density battery. However, a volume expansion rate of the silicon-based material is high during charging/discharging, causing poor cycle performance of the battery. In addition, a solid electrolyte interphase film (SEI film) on a surface of the silicon-based material is continuously and repeatedly regenerated as the silicon-based material expands, increasing internal resistance of the battery and reducing dynamic performance.

In view of this, this application provides a secondary battery. The secondary battery includes a negative electrode plate and an electrolyte solution. The negative electrode plate includes a silicon-carbon composite material having a three-dimensional cross-linked pore network structure. The electrolyte solution includes a first component, and the first component includes one or more of compounds represented by Formula I and Formula II,

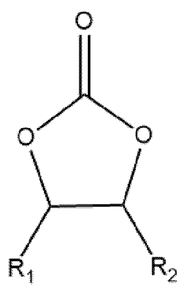 Formula I 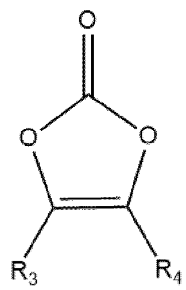 Formula II

$R_1$, $R_2$, $R_3$, and $R_4$ including at least one of a hydrogen atom, a fluorine atom, and a fluorine-substituted or fluorine-unsubstituted $C_1$-$C_4$ alkyl group, and Formula I including fluorine element.

In this specification, the three-dimensional cross-linked pore network structure is usually a structure in which two or more pores are interconnected or staggered and share a pore volume in the silicon-carbon composite material, especially in a pore structure formed by carbon matrix particles.

The pore structure of the silicon-carbon composite material may be tested by using a device and method known in the art. For example, the pore structure may be tested by using a scanning electron microscope (e.g., ZEISS Sigma 300). By way of example, operations may be performed according to the following steps: First, the negative electrode plate including the silicon-carbon composite material was cut into a to-be-tested sample of a specific size (for example, 6 mm×6 mm), the to-be-tested sample was sandwiched by two electrically and thermally conductive sheets (for example, copper foils), the to-be-tested sample and the sheets were adhered and fixed to each other by using an adhesive (for example, a double-sided tape), and pressed by using a flat block of iron with a specific mass (for example, about 400 g) for specific time (for example, 1 h), making a gap between the to-be-tested sample and the copper foils as small as possible, edges were trimmed by using a scissor, and the to-be-tested sample and the copper foil were adhered to a sample stage with an

electrically-conductive adhesive as long as the sample was slightly beyond the sample stage. Then, the sample stage was loaded into a sample holder to be locked and fixed. A power supply of an argon ion cross-section polisher (e.g., IB-19500CP) was turned on, vacancy (for example, 10 Pa-4 Pa) was drawn, an argon flow (for example, 0.15 Mpa), a voltage (for example, 8 KV), and polishing time (for example, 2 h) were set, the sample stage was adjusted to be in a swing mode to start polishing, and after the polishing, an ion polished cross-sectional morphology (CP) picture of the to-be-tested sample was obtained by using the scanning electron microscope (e.g., ZEISS Sigma 300).

The silicon-carbon composite material having the three-dimensional cross-linked pore network structure has a stable porous framework and good mechanical strength, and can have high loading of silicon and effectively reduce volume changes of silicon during charging/discharging. In addition, the first component in the electrolyte solution has an electron-withdrawing group F or an electron-rich double bond structure. This can further facilitate cyclic radical polymerization or ring-opening polymerization of a cyclic structure of the first component, and form a solid electrolyte film on a silicon-based material in time, so that damage to an interphase structure caused by a volume effect of silicon during charging/discharging is inhibited, interphase resistance is reduced, and cycle stability of the battery is improved.

In some embodiments, a specific surface area of the silicon-carbon composite material is SSA $m^2/g$; a mass fraction of the first component is EL g/g based on a total mass of the electrolyte solution; and EL:SSA ranges from 0.005 to 0.4, and optionally ranges from 0.014 to 0.2.

In some embodiments, a specific surface area of the silicon-carbon composite material is SSA $m^2/g$; a mass fraction of the first component is EL g/g based on a total mass of the electrolyte solution; and EL:SSA is optionally 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.25, 0.3, 0.35, 0.4, 0.45, or 0.5.

In this specification, the specific surface area SSA has a meaning well-known in the art. Generally, the surface area is represented with a unit of $m^2/g$, and may be measured by using an instrument and a method known in the art. For example, with reference to the standard GB/T 19587-2017, a test method for specific surface area analysis by nitrogen (e.g., inert gas) adsorption is used for testing, and the specific surface area is calculated by using a Brunauer Emmett Teller (BET) method. The test for specific surface area analysis by nitrogen adsorption may be performed by using a Tri-Star 3020 specific surface and pore size analyzer from Micromeritics, US.

When the ratio EL:SSA of the mass fraction of the first component in the electrolyte solution to the specific surface area SSA of the silicon-carbon composite material satisfies the foregoing range, the first component can be effectively intercalated in the pore structure of the silicon-carbon composite material to be in sufficient contact with the silicon-carbon composite material. Through effective cooperation between an addition amount of the first component and the specific surface area of the silicon-based material, the SEI film on the silicon-carbon composite material is formed in time, so that internal resistance of the battery is reduced, and a cycle capacity retention rate of the battery is increased.

In some embodiments, a mass fraction of the first component is EL g/g based on a total mass of the electrolyte solution; in an outer peripheral region of the silicon-carbon composite material, a mass percentage of silicon element in the silicon-carbon composite material relative to a total mass of the silicon-carbon composite material is B1, where the outer peripheral region of the silicon-carbon composite material is a region extending from an outer surface of the silicon-carbon composite material to an inner portion of the silicon-carbon composite material by a distance less than r/2, and r represents a short diameter of the silicon-carbon composite material; and EL:B1 ranges from 0.01 to 2, and optionally ranges from 0.15 to 1.2.

The content of silicon element may be determined by performing an inductively coupled plasma (ICP) atomic emission spectrometry test. To be specific, the silicon-carbon composite material was used as a sample, the sample was digested by using aqua regia and hydrofluoric acid HF, and the ICP test was performed by using a solution obtained through digestion for 15 min and a solution obtained through complete digestion. In this case, silicon content in a solution obtained through digestion for 45 min is the silicon content in the "outer peripheral region of the silicon-carbon composite material".

In some embodiments, a ratio EL:B1 of the mass fraction of the first component in the electrolyte solution to the mass percentage B1 of silicon element in the silicon-carbon composite material relative to the total mass of the silicon-carbon composite material is optionally 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.3, 0.4, 0.5, 0.6, 0.7, 0.8, 0.9, 1, 1.2, 1.4, 1.6, 1.8, or 2.

Compared with internal silicon element in an inner peripheral region, silicon element in the outer peripheral region of the silicon-carbon composite material is less susceptible to constraints from a carbon skeleton, resulting in more significant volume expansion. When the ratio of the mass fraction of the first component in the electrolyte solution to the mass percentage B1 of silicon element in the silicon-carbon composite material relative to the total mass of the silicon-carbon composite material satisfies the foregoing range, the SEI film can be quickly formed on silicon element in the outer peripheral region of the silicon-carbon composite material by using the first component, so that volume expansion of silicon during charging/discharging is alleviated, and structural stability of the silicon-carbon composite material is improved, thereby improving cycle stability of the battery.

In some embodiments, a total pore volume of pores that are in the silicon-carbon composite material and whose

pore sizes are greater than 100 nm is V1 $cm^3/g$, and a ratio EL:V1 of the mass fraction EL of the first component in the electrolyte solution to the total pore volume V1 of the pores that are in the silicon-carbon composite material and whose pore sizes are greater than 100 nm ranges from 10 to 500, and preferably ranges from 20 to 300.

For a method for testing pore volumes with different pore sizes, refer to the standard GB/T 19587-2004. A mesopore size distribution test Barret joyner Halenda (BJH) is performed, the test is performed by using a gas adsorption and desorption method through a microporous-mesoporous model to select adsorption branch data, so as to determine and collect statistics on a total pore volume V1 of pores whose pore sizes are greater than 100 nm.

In some embodiments, a total pore volume of pores that are in the silicon-carbon composite material and whose pore sizes are greater than 100 nm is V1 $cm^3/g$, and a ratio EL:V1 of the mass fraction EL of the first component in the electrolyte solution to the total pore volume V1 of the pores that are in the silicon-carbon composite material and whose pore sizes are greater than 100 nm is optionally 10, 20, 30, 40, 50, 60, 70, 80, 90, 100, 150, 200, 250, 300, 350, 400, 450, or 500.

When the ratio EL:V1 of the mass fraction EL of the first component in the electrolyte solution to the total pore volume V1 of the pores that are in the silicon-carbon composite material and whose pore sizes are greater than 100 nm satisfies the foregoing range, the first component may be smoothly intercalated in the pore structure of the silicon-carbon composite material to be in cooperation with the silicon-carbon composite material, to further improve an ion migration rate in an electrode active material, reduce the internal resistance of the battery, and increase the cycle capacity retention rate of the battery.

In some embodiments, the compound shown in Formula I includes one or more of the following compounds:

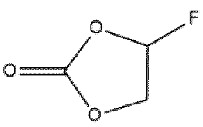, 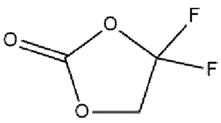, 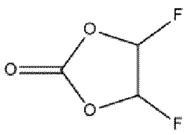, 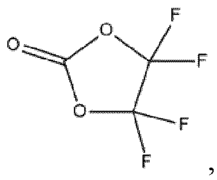, 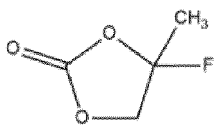,

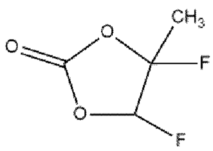, 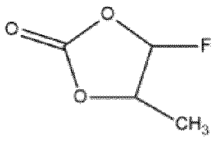, 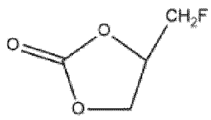, 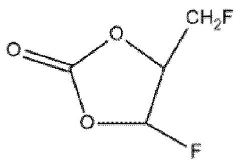,

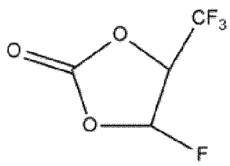, and 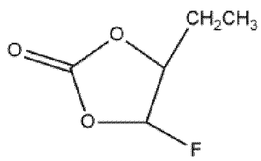;

and

the compound shown in Formula II includes one or more of the following compounds:

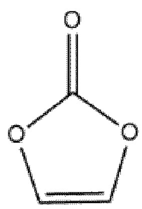, 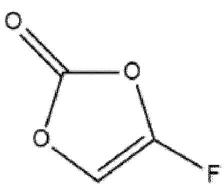, 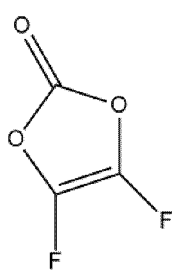, 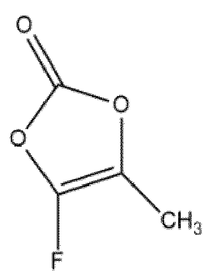, 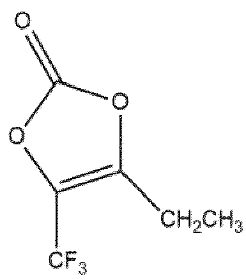,

and

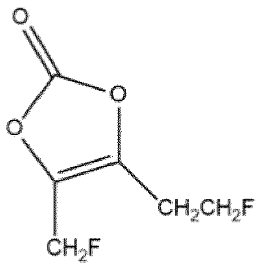

.

The compounds shown in Formula I and the compounds shown in Formula II have electron-withdrawing groups F or electron-rich double bond structures. This can further facilitate cyclic radical polymerization or ring-opening polymerization of cyclic structures of the compounds to quickly form the SEI film, so that the damage to the interphase structure caused by the volume effect of silicon during charging/discharging is inhibited, and the cycle stability is improved.

In some embodiments, in the outer peripheral region of the silicon-carbon composite material, a mass percentage A1 of carbon element in the silicon-carbon composite material relative to the total mass of the silicon-carbon composite material and the mass percentage B1 of silicon element in the silicon-carbon composite material relative to the total mass of the silicon-carbon composite material satisfy $0.8 \leq B1/A1 \leq 2.5$, and optionally satisfy $1 \leq B1/A1 \leq 1.5$.

Content of carbon element may be determined by using an infrared adsorption method for carbon-sulfur content analysis, with reference to the standard GB/T20123-2006. To be specific, the silicon-carbon composite material was used as a sample. In this case, carbon content obtained through testing for 20 min is the carbon content in the "outer peripheral region of the silicon-carbon composite material". In the outer peripheral region of the silicon-carbon composite material, when the mass percentage A1 of carbon element in the silicon-carbon composite material relative to the total mass of the silicon-carbon composite material and the mass percentage B1 of silicon element in the silicon-carbon composite material relative to the total mass of the silicon-carbon composite material satisfy the foregoing range, mass of silicon in the pore structure of the silicon-carbon composite material is high. This can significantly increase a capacity of a negative electrode active material. In addition, a voltage at which metal ions are intercalated is low. This facilitates intercalation of the metal ions. In this way, rate cycle performance of the secondary battery is improved. In addition, the three-dimensional cross-linked pore network structure can inhibit volume expansion of silicon during cycling, and improve structural stability of the negative electrode active material, to improving cycle performance of the battery.

In some embodiments, a mass percentage A of carbon element in the silicon-carbon composite material relative to the total mass of the silicon-carbon composite material tends to be decreased in a direction from a geometric center of the silicon-carbon composite material to the outer surface of the silicon-carbon composite material, and a mass percentage B of silicon element in the silicon-carbon composite material relative to the total mass of the silicon-carbon composite material tends to be increased in the direction from the geometric center of the silicon-carbon composite material to the outer surface of the silicon-carbon composite material.

For example, the silicon-carbon composite material may be in irregular shape, and therefore, the geometric center of the silicon-carbon composite material may be a geometric center of a cuboid tangent to the silicon-carbon composite material. In the direction from the geometric center of the silicon-carbon composite material to the outer surface of the silicon-carbon composite material, the mass percentage A of carbon element is gradually decreased, and the mass percentage B of silicon element is gradually increased, and silicon content in the pore structure of the silicon-carbon composite material is gradually increased. The silicon content is high, so that the capacity of the negative electrode active material can be significantly increased.

In addition, the content of silicon element is increased from the outer surface to the center, so that a carbon material has a growingly significant inhibitory effect on expansion of silicon element, to further improve cycle performance of the battery.

In some embodiments, the specific surface area SSA of the silicon-carbon composite material satisfies $2\ m^2/g \leq SSA \leq 10\ m^2/g$, and optionally satisfies $3\ m^2/g \leq SSA \leq 7\ m^2/g$.

In some embodiments, the specific surface area SSA of the silicon-carbon composite material is optionally 2 $m^2/g$, 3 $m^2/g$, 4 $m^2/g$, 5 $m^2/g$, 6 $m^2/g$, 7 $m^2/g$, 8 $m^2/g$, 9 $m^2/g$, or 10 $m^2/g$, or in a range formed by any two of the foregoing values.

When the specific surface area SSA of the silicon-carbon composite material satisfies the foregoing range, the specific surface area of the silicon-carbon composite material is large, and dynamic performance of the material is good, so that initial coulombic efficiency of the battery is improved.

In any embodiment, the silicon-carbon composite material includes a carbon matrix particle and a silicon nanoparticle. The carbon matrix particle includes a three-dimensional cross-linked pore network structure. The silicon nanoparticle is at least partially arranged in the three-dimensional cross-linked pore network structure.

The carbon matrix particle in this application has a stable porous framework structure and a strong support

capability. To be specific, the carbon matrix particle has a high stress capability and excellent mechanical properties and electrical conductivity. The carbon matrix particle has the three-dimensional cross-linked pore network structure, so that there is a large amount of space for intercalation of silicon matrix nanoparticles, and a large amount of silicon can be stored, to effectively increase loading of silicon in the silicon-carbon composite material. After the carbon matrix particle is composited with the silicon matrix nanoparticle, electrical conductivity of the silicon-carbon composite material can be improved, the volume effect of silicon during lithium deintercalation can be alleviated, and a stress change of the silicon matrix nanoparticle can be fully withstood, thereby ensuring the structural stability of the silicon-carbon composite material, and improving cycle stability and a lithium storage capability of the silicon-carbon composite material. Therefore, when used in the secondary battery, the silicon-carbon composite material can improve cycle performance and energy density of the secondary battery.

In some embodiments, the silicon nanoparticle includes one or more of a silicon-oxide compound, a prelithiated silicon-oxide compound, amorphous silicon, crystalline silicon, and a silicon-carbon composite, and optionally includes amorphous silicon.

In some embodiments, the carbon matrix includes one or more of graphite, soft carbon, and hard carbon.

In some embodiments, a mass percentage of the silicon nanoparticle in the silicon-carbon composite material is greater than or equal to 40%, and optionally ranges from 40% to 60%.

In some embodiments, the mass percentage of the silicon nanoparticle in the silicon-carbon composite material is optionally 40%, 45%, 50%, 55%, or 60%.

Mass of the silicon nanoparticles in the silicon-carbon composite material may be tested by using a device and method known in the art, for example, may be determined with reference to the standard EPA 6010D-2014. To be specific, element analysis-inductively coupled plasma optical emission spectroscopy (ICP-OES) may be used for testing. A to-be-tested solid is dissolved into a liquid by using strong acid, the liquid is introduced into an ICP light source through nebulization, and after undergoing ionization and excitation under a high-intensity magnetic field, to-be-tested gaseous atoms are restored from an excited state to a ground state. The to-be-tested gaseous atoms release energy in this process and are recorded as different characteristic spectral lines, and quantitative analysis of trace element is performed.

The negative electrode material used in the secondary battery in this application uses a carbon-based material having a three-dimensional cross-linked pore network structure to achieve high loading of silicon nanoparticles in the negative electrode material, so that the silicon-carbon composite material has a high capacity, and the energy density of the battery can be further improved.

In some embodiments, a ratio of powder compaction density P11 g/cm$^3$ of the silicon-carbon composite material tested after powder compaction once under an action force of 20000 N to powder compaction density P21 g/cm$^3$ of the silicon-carbon composite material tested after powder compaction for 20 times under the action force of 20000 N satisfies $1.00<P21/P11\leq1.20$, and optionally satisfies $1.02\leq P21/P11\leq1.10$.

When the ratio P21/P11 satisfies the foregoing range, the silicon-carbon composite material has a high capacity per gram and has good stress resistance, to improve structural stability of a negative electrode film layer, so that the secondary battery including the material gives consideration to good cycle performance while having high energy density.

In some embodiments, the powder compaction density P11 g/cm$^3$ of the silicon-carbon composite material tested after powder compaction once under the action force of 20000 N satisfies $1.10\leq P11\leq1.40$, and optionally satisfies $1.12\leq P11\leq1.35$.

When the powder compaction density P11 g/cm$^3$ of the silicon-carbon composite material tested after powder compaction once under the action force of 20000 N satisfies the foregoing range, the negative electrode film layer has high compaction density, so that the secondary battery has high energy density.

In some embodiments, the secondary battery includes a negative electrode plate. The negative electrode plate includes a negative electrode current collector and a negative electrode film layer arranged on at least one surface of the negative electrode current collector. The negative electrode film layer includes a negative electrode active material.

By way of example, the negative electrode current collector has two opposite surfaces in a thickness direction thereof, and the negative electrode film layer is arranged on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of the polymer material base layer. The composite current collector may be formed by forming a metal material (e.g., copper, copper alloy, nickel, nickel alloy, titanium, titanium alloy, silver, or silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other auxiliary agents, for example, a thickener (such as sodium carboxymethyl cellulose (CMC-Na)).

In some embodiments, the negative electrode plate may be prepared in the following manner. The components for preparing the negative electrode plate, such as the negative electrode active material, the conductive agent, the binder, and any other component, were dispersed in a solvent (e.g., deionized water) to form a negative electrode slurry. The negative electrode slurry was coated on the negative electrode current collector, followed by drying, cold pressing, and other processes, to obtain the negative electrode plate.

In some embodiments, the secondary battery includes a positive electrode plate. The positive electrode plate includes a positive electrode current collector and a positive electrode film layer arranged on at least one surface of the positive electrode current collector. The positive electrode film layer includes a positive electrode active material according to the first aspect of this application.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (e.g., aluminum, aluminum alloy, nickel, nickel alloy, titanium, titanium alloy, silver, or silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode active material may be a positive electrode active material well-known in the art for use in a battery. By way of example, the positive electrode active material may include at least one of the following materials: a lithium-containing phosphate of an olivine structure, a lithium transition metal oxide, and respective modified compounds thereof. However, this application is not limited to these materials, and other conventional materials that can be used as a positive electrode active material of a battery may also be used. These positive electrode active materials may be used alone or in combination. Examples of the lithium transition metal oxide may include, but are not limited to, at least one of a lithium-cobalt oxide (e.g., $LiCoO_2$), a lithium-nickel oxide (e.g., $LiNiO_2$), a lithium-manganese oxide (e.g., $LiMnO_2$ or $LiMn_2O_4$), a lithium-nickel-cobalt oxide, a lithium-manganese-cobalt oxide, a lithium-nickel-manganese oxide, a lithium-nickel-cobalt-manganese oxide (e.g., $LiNi_{1/3}Co_{1/3}Mn_{1/3}O_2$ (or briefly referred to as $NCM_{333}$), $LiNi_{0.5}Co_{0.2}Mn_{0.3}O_2$ (or briefly referred to as $NCM_{523}$), $LiNi_{0.5}Co_{0.25}Mn_{0.25}O_2$ (or briefly referred to as $NCM_{211}$), $LiNi_{0.6}Co_{0.2}Mn_{0.2}O_2$ (or briefly referred to as $NCM_{622}$), $LiNi_{0.8}Co_{0.1}Mn_{0.1}O_2$ (or briefly referred to as $NCM_{811}$)), a lithium-nickel-cobalt-aluminum oxide (e.g., $LiNi_{0.85}Co_{0.15}Al_{0.05}O_2$), and modified compounds thereof. Examples of the lithium-containing phosphate of the olivine structure may include, but are not limited to, at least one of lithium iron phosphate (e.g., $LiFePO_4$ (or briefly referred to as LFP)), a composite material of lithium iron phosphate and carbon, lithium manganese phosphate (e.g. $LiMnPO_4$), a composite material of lithium manganese phosphate and carbon, lithium iron manganese phosphate, and a composite material of lithium manganese iron phosphate and carbon.

In some embodiments, the positive electrode active material is a nickel-rich material, and a molar proportion of nickel element in transition metal of the positive electrode active material is greater than 85%.

In some embodiments, the positive electrode film layer further optionally includes a binder. By way of example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally includes a conductive agent. By way of example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: The components for preparing the positive electrode plate, such as the positive electrode active material, the conductive agent, the binder, and any other component, were dispersed in a solvent (e.g., N-methylpyrrolidone) to form a positive electrode slurry. The positive electrode slurry was coated on the positive electrode current collector, followed by drying, cold pressing, and other processes, to obtain the positive electrode plate.

In some embodiments, the secondary battery further includes a separator. The type of the separator is not particularly limited in this application, and any well-known separator of a porous structure having good chemical stability and mechanical stability may be used.

In some embodiments, the material of the separator may be selected from at least one of glass fiber, non-woven cloth, polyethylene, polypropylene, and polyvinylidene fluoride. The separator may be a single-layer film or a multi-layer

composite film, which is not particularly limited herein. When the separator is a multi-layer composite film, the layers may be of the same or different materials, which is not particularly limited herein.

In some embodiments, the secondary battery includes at least one of a lithium-ion battery, a sodium-ion battery, a magnesium-ion battery, and a potassium-ion battery.

In an embodiment of this application, a power consuming apparatus is provided, including the secondary battery according to any embodiment.

The shape of the secondary battery is not particularly limited in this application, and may be a cylinder, a rectangle, or any other shape. For example, FIG. 1 shows a secondary battery 1 having a rectangle structure as an example.

In some embodiments, referring to FIG. 2, the outer package may include a housing 11 and a cover plate 13. The housing 11 may include a bottom plate and side plates connected to the bottom plate, and the bottom plate and the side plates enclose an accommodating cavity. The housing 11 has an opening in communication with the accommodating cavity, and the cover plate 13 can cover the opening, to close the accommodating cavity. The positive electrode plate, the negative electrode plate, and the separator may be made into an electrode assembly 12 by a winding process or a lamination process. The electrode assembly 12 is encapsulated in the accommodating cavity. The electrode assembly 12 is infiltrated by the electrolyte solution. The quantity of electrode assemblies 12 included in the secondary battery 1 may be one or more, and may be determined by a person skilled in the art according to specific actual requirements.

The power consuming apparatus includes the secondary battery provided in this application. The secondary battery may be used as a power supply of the power consuming apparatus, or may be used as an energy storage unit of the power consuming apparatus. The power consuming apparatus may include, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, an energy storage system, and the like.

FIG. 3 shows a power consuming apparatus as an example. The power consuming apparatus is a pure electric vehicle, a hybrid electric vehicle, a plug-in hybrid electric vehicle, or the like. To satisfy requirements of the power consuming apparatus for high power and high energy density of the secondary battery, the battery pack or the battery module may be used.

Another example of the apparatus may be a mobile phone, a tablet computer, or a notebook computer. The apparatus is generally required to be thin and light, and may have a secondary battery used as a power supply.

## Examples

Examples of this application are described below. The examples described below are illustrative, are merely used to explain this application, and should not be construed as a limitation to this application. The embodiments in which specific technologies or conditions are not indicated shall be carried out in accordance with the technologies or conditions described in the literature in the art or in accordance with the product specification. The reagents or instruments for which no manufacturers are noted are all common products commercially available from the market.

### First, secondary battery

Example 1

(1) Preparation of a silicon-carbon composite material

A gas including a silicon precursor was provided for a carbon matrix particle having a three-dimensional cross-linked pore network structure.

The silicon precursor generated, through chemical vapor deposition, a silicon nanoparticle attached to the carbon matrix particle, to obtain the silicon-carbon composite material.

(2) Preparation of a negative electrode plate

A negative electrode active material (silicon-carbon composite material), conductive carbon black, a sodium carboxymethyl cellulose (CMC) thickener, a styrene-butadiene rubber emulsion (SBR) binder were fully stirred and mixed in an appropriate amount of deionised water at a mass ratio of 96.5:1.0:1.0:1.5, to form a homogeneous negative electrode slurry. The negative electrode slurry was coated on a negative electrode current collector, followed by processes such as drying, to obtain the negative electrode plate.

(3) Preparation of a positive electrode plate

An aluminum foil with a thickness of 8 μm was used as a positive electrode current collector. A positive electrode active material $LiNi_{0.8}Co_{0.1}Mn_{0.1}O_2$ ($NCM_{811}$), an acetylene black conductive agent, a polyvinylidene fluoride (PVDF) binder were dissolved in an N-methylpyrrolidone (NMP) solvent at a mass ratio of 93:2:5, and fully stirred for uniform mixing, to obtain a positive electrode slurry. Then, the positive electrode slurry was uniformly coated on the positive electrode current collector, followed by drying, cold pressing, and slitting, to obtain the positive electrode plate.

(4) Preparation of an electrolyte solution

Ethylene carbonate (EC), ethyl methyl carbonate (EMC), and diethyl carbonate (DEC) were mixed at a volume ratio of 1:1:1 to obtain an organic solvent, a fully dried lithium salt $LiPF_6$ was dissolved in the mixed organic solvent to prepare an electrolyte solution with a concentration of 1 mol/L, and a 10 wt% compound A-1 was added to be used as an additive.

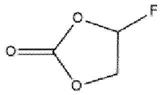
A-1

(5) Separator

A polypropylene film is used as the separator.

(6) Preparation of a battery

The positive electrode plate, the separator, and the negative electrode plate were sequentially stacked, so that the separator was located between the positive electrode plate and the negative electrode plate to separate the positive electrode plate from the negative electrode plate, wound to obtain a bare cell, and welded the bare cell with tabs. The bare cell was packed into an aluminum shell and baked at 80°C to remove water, and the electrolyte solution was injected into the aluminum shell and sealed, to obtain an uncharged battery. The uncharged battery then sequentially undergone processes such as standing, hot and cold pressing, formation, shaping, capacity testing, to obtain a lithium-ion battery product in Example 1.

Examples 2-4

A battery preparation method in Examples 2-4 is similar to that in Example 1, but types of the additive are adjusted in Examples 2-4.

Electrolyte solution additive in Example 2

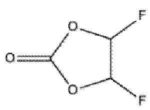
A-2

Electrolyte solution additive in Example 3

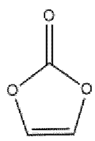
A-3

Electrolyte solution additive in Example 4

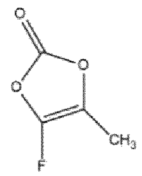

A-4

Examples 5-8

A battery preparation method in Examples 5-8 is similar to that in Example 1, but content of an electrolyte solution additive is adjusted in Examples 5-8, making EL:SSA, EL:B1, and EL:V1 changed. Specific parameters are shown in Table 1.

Examples 9-12

A battery preparation method in Examples 9-12 is similar to that in Example 1, but a deposition position of a silicon-based particle in the silicon-carbon composite material is adjusted in Examples 9-12, to adjust a value of EL:B1. Specific parameters are shown in Table 1.

Examples 13-16

A battery preparation method in Examples 13-16 is similar to that in Example 1, but a proportion of large and small pores in the silicon-carbon composite material is adjusted in Examples 13-16, to adjust a value of EL:V1. Specific parameters are shown in Table 1.

Comparative Example 1

A battery preparation method in Comparative Example 1 is similar to that in Example 1, but a first component is not added to the electrolyte solution.

Comparative Example 2

A battery preparation method in Comparative Example 2 is similar to that in Example 1, but a pore structure of a carbon matrix particle in Comparative Example 2 is a honeycomb pore structure.

Comparative Example 3

A battery preparation method in Comparative Example 3 is similar to that in Example 3, but a pore structure of a carbon matrix particle in Comparative Example 3 is a honeycomb pore structure.

Comparative Example 4

A battery preparation method in Comparative Example 4 is similar to that in Example 4, but a pore structure of a carbon matrix particle in Comparative Example 4 is a honeycomb pore structure.

**Second, test method**

1. Silicon-carbon composite material

(1) Structural characterization of the silicon-carbon composite material

A pore structure of the silicon-carbon composite material may be tested by using a device and method known in the art. For example, the pore structure may be tested by using a scanning electron microscope (e.g., ZEISS Sigma 300). By way of example, operations may be performed according to the following steps: First, the negative electrode plate including the silicon-carbon composite material was cut into a to-be-tested sample of a specific size (for example, 6 mm×6 mm), the to-be-tested sample was sandwiched by two electrically and thermally conductive sheets (for example, copper foils), the to-be-tested sample and the sheets were adhered and fixed to each other by using an adhesive (for example, a double-sided tape), and pressed by using a flat block of iron with a specific mass (for example, about 400 g) for specific time

(for example, 1 h), making a gap between the to-be-tested sample and the copper foils as small as possible, edges were trimmed by using a scissor, and the to-be-tested sample and the copper foil were adhered to a sample stage with an electrically-conductive adhesive as long as the sample was slightly beyond the sample stage. Then, the sample stage was loaded into a sample holder to be locked and fixed. A power supply of an argon ion cross-section polisher (e.g., IB-19500CP) was turned on, vacancy (for example, 10 Pa-4 Pa) was drawn, an argon flow (for example, 0.15 Mpa), a voltage (for example, 8 KV), and polishing time (for example, 2 h) were set, the sample stage was adjusted to be in a swing mode to start polishing, and after the polishing, an ion polished cross-sectional morphology (CP) picture of the to-be-tested sample was obtained by using the scanning electron microscope (e.g., ZEISS Sigma 300).

(2) Specific surface area SSA of the silicon-carbon composite material

The specific surface area is tested by using a gas adsorption method with reference to the test standard GB/T19587.2017. To be specific, the battery was disassembled, a negative electrode was scraped, the binder was removed through high-temperature ablation, a powder material was used as a sample of the silicon-carbon composite material, a sample tube was immersed in liquid nitrogen at -196°C, an nitrogen adsorption amount on a solid surface under different pressures was determined under a relative pressure ranging from 0.05 to 0.30, and a monolayer adsorption amount of the sample was obtained based on the BET multilayer adsorption theory and a formula thereof, to calculate the specific surface area of the negative electrode active material.

BET is calculated as follows:

$$\frac{P/P_0}{n_a(1-P/P_0)} = \frac{1}{n_m C} + \frac{C-1}{n_m C} \cdot \frac{P}{P_0}$$

In the formula, $n_a$ represents an amount of adsorbed gas, in a unit of mol/g; $p/p_0$ represents the relative pressure; nm represents the monolayer adsorption amount; and C represents a revised parameter, used for limiting a quantity of adsorption layers on a surface of an adsorbent.

(3) Pore size of the silicon-carbon composite material

The pore size is tested by using the gas adsorption method with reference to the test standards GB/T19587-2017&GB/T21650.2-2008. To be specific, the silicon-carbon composite material was used as a sample, a sample tube was immersed in liquid nitrogen at -196°C, nitrogen was adsorbed on the to-be-tested material under a relative pressure ranging from 0 to 1, and pore size distribution of a porous material was represented based on a diagram of a relationship between a volume of each pore size and a corresponding partial pressure.

(4) Powder compaction density

With reference to the standard GB/T 24533-2009, the compaction density is tested by using an electronic pressure tester (e.g., UTM7305). To be specific, a to-be-tested power sample with a specific mass G was placed on a dedicated compaction die (whose bottom area was represented by S), different pressures were set (where 20000 N or 50000 N may be used in this application), a pressure was maintained for 20s and then released, and after 10s, a thickness H of powder after being fully compacted under the pressure was read from the device, so that compaction density under the pressure may be obtained through calculation, that is, compaction density of the material under the pressure=G/(H*S).

(5) Characterization of distribution of silicon element and carbon element in the silicon-carbon composite material

With reference to the test standard GB-T17359-2012, element distribution of a particle cross section is tested through energy spectrum ion polishing and cross section element analysis.

(6) Test of content of silicon element in the silicon-carbon composite material

The content of silicon element may be determined by performing an inductively coupled plasma (ICP) atomic emission spectrometry test. To be specific, the silicon-carbon composite material was used as a sample, the sample was digested by using aqua regia and hydrofluoric acid HF, and the ICP test was performed by using a solution obtained through digestion for 15 min and a solution obtained through complete digestion. In this case, silicon content in a solution obtained through digestion for 45 min is silicon content in an "outer peripheral region of the silicon-carbon composite material", and a difference between silicon content in the solution obtained through complete digestion and silicon content

in a solution obtained through digestion for 1 h is silicon content in a "central region of the silicon-carbon composite material".

(7) Test of content of carbon element in the silicon-carbon composite material

The test is performed by using an infrared adsorption method for carbon-sulfur content analysis, with reference to the test standard GB/T20123-2006. To be specific, the silicon-carbon composite material was used as a sample, carbon content obtained through testing for 20 min is carbon content in the "outer peripheral region of the silicon-carbon composite material", and a difference between the carbon content obtained through testing for 20 min and carbon content obtained after the complete test is carbon content in the "outer peripheral region of the silicon-carbon composite material".

(8) Test of a short diameter r of the silicon-carbon composite material

The short diameter r is determined by using a three-axis representation method. To be specific, the short diameter r is determined on a planar projection image of the silicon-carbon composite material.

2. Battery performance

(1) Cycle capacity retention rate at room temperature

The secondary battery prepared according to the examples and the comparative examples was charged at 25°C at a constant current rate of 0.5 C to a charging cut-off voltage of 4.25 V, charged at a constant current rate to a current less than or equal to 0.05 C, allowed to stand for 5 min, discharged at a constant current rate of 0.33 C to a discharging cut-off voltage of 2 V, and then allowed to stand for 5 min. This is a charging/discharging cycle. According to this method, a test for charging/discharging cycles is performed on the battery, and a capacity retention rate of a lithium-ion battery after 800 cycles is calculated.

(2) Internal resistance of the battery

At 25°C, the lithium-ion battery prepared according to the examples and the comparative examples and the lithium-ion battery after 800 cycles were charged to 4.3 V at a constant current of 1 C. The battery was charged at a constant voltage of 4.3 V until a current was less than 0.05 C, and then discharged at 1 C for 30 min. In other words, the battery was adjusted to 50% SOC. Then, positive and negative meter pens of a TH2523A AC internal resistance tester were respectively in contact with positive and negative terminals of the battery, and internal resistance values of the battery were read from the internal resistance tester, respectively recorded as initial battery internal resistance (mQ) and battery internal resistance (mQ) after 800 cycles.

Third, analysis of test results of the examples and the comparative examples

Secondary batteries according to the examples and the comparative examples are respectively prepared by using the foregoing methods, and various parameters are measured. For measured results, refer to Table 1 below.

Table 1

| Number | Negative electrode active material | Electrolyte solution additive | EL/SSA | EL/B 1 | EL/V1 | Capacity retention rate after 800 cycles | Initial internal resistance (mQ) | Internal resistance after 800 cycles (mΩ) |
|---|---|---|---|---|---|---|---|---|
| Example 1 | Three-dimensional cross-linked network structure | A-1 | 0.1 | 0.5 | 100 | 46% | 1089 | 2068 |

(continued)

| Number | Negative electrode active material | Electrolyte solution additive | EL/SSA | EL/B 1 | EL/V1 | Capacity retention rate after 800 cycles | Initial internal resistance (mQ) | Internal resistance after 800 cycles (mΩ) |
|---|---|---|---|---|---|---|---|---|
| Example 2 | Three-dimensional cross-linked network structure | A-2 | 0.1 | 0.5 | 100 | 42% | 1211 | 2332 |
| Example 3 | Three-dimensional cross-linked network structure | A-3 | 0.1 | 0.5 | 100 | 41% | 1214 | 2331 |
| Example 4 | Three-dimensional cross-linked network structure | A-4 | 0.1 | 0.5 | 100 | 42% | 1213 | 2334 |
| Example 5 | Three-dimensional cross-linked network structure | A-1 | 0.005 | 0.025 | 5 | 25% | 1411 | 2821 |
| Example 6 | Three-dimensional cross-linked network structure | A-1 | 0.4 | 2 | 400 | 26% | 1412 | 2831 |
| Example 7 | Three-dimensional cross-linked network structure | A-1 | 0.014 | 0.07 | 14 | 35% | 1312 | 2631 |
| Example 8 | Three-dimensional cross-linked network structure | A-1 | 0.2 | 1 | 200 | 37% | 1313 | 2632 |
| Example 9 | Three-dimensional cross-linked network structure | A-1 | 0.1 | 0.15 | 100 | 40% | 1210 | 2330 |
| Example 10 | Three-dimensional cross-linked network structure | A-1 | 0.1 | 1.2 | 100 | 44% | 1125 | 2123 |

(continued)

| Number | Negative electrode active material | Electrolyte solution additive | EL/SSA | EL/B 1 | EL/V1 | Capacity retention rate after 800 cycles | Initial internal resistance (mQ) | Internal resistance after 800 cycles (mΩ) |
|---|---|---|---|---|---|---|---|---|
| Example 11 | Three-dimensional cross-linked network structure | A-1 | 0.1 | 0.01 | 100 | 36% | 1314 | 2612 |
| Example 12 | Three-dimensional cross-linked network structure | A-1 | 0.1 | 2 | 100 | 35% | 1315 | 2621 |
| Example 13 | Three-dimensional cross-linked network structure | A-1 | 0.1 | 0.5 | 10 | 36% | 1324 | 2563 |
| Example 14 | Three-dimensional cross-linked network structure | A-1 | 0.1 | 0.5 | 20 | 45% | 1100 | 2113 |
| Example 15 | Three-dimensional cross-linked network structure | A-1 | 0.1 | 0.5 | 300 | 45% | 1100 | 2100 |
| Example 16 | Three-dimensional cross-linked network structure | A-1 | 0.1 | 0.5 | 500 | 35% | 1345 | 1598 |
| Comparative Example 1 | Three-dimensional cross-linked network structure | / | / | / | / | 20% | 1511 | 3521 |
| Comparative Example 2 | Honeycomb pore structure | A-1 | 0.1 | 0.5 | 100 | 15% | 1480 | 3350 |
| Comparative Example 3 | Honeycomb pore structure | A-3 | 0.1 | 0.5 | 100 | 14% | 1481 | 3352 |
| Comparative Example 4 | Honeycomb pore structure | A-4 | 0.1 | 0.5 | 100 | 16% | 1483 | 3354 |

It can be known from the results in Table 1 that, the negative electrode active material of the battery in Examples 1-16 is the silicon-carbon composite material having the three-dimensional cross-linked pore network structure, and the

electrolyte solution includes the compounds shown in Formula I or Formula II, and the battery in Examples 1-16 has lower internal resistance and a higher cycle capacity retention rate in comparison with the battery in Comparative Example 1 in which the electrolyte solution does not include the compounds shown in Formula I or Formula II and the battery in Comparative Examples 2-4 whose negative electrode active material is the silicon-carbon composite material having the honeycomb pore structure and in which the electrolyte solution includes the compounds shown in Formula I or Formula II.

In the comparative examples, a negative electrode is made of the silicon-carbon composite material having the honeycomb pore structure, and silicon particles are not likely to deposit in the interior of the honeycomb pore structure. In this case, mass content of silicon-based particles in the silicon-carbon composite material having the honeycomb pore structure is low, that is, only 7%, and silicon element is concentrated on a surface of the composite material. As a result, it is difficult for a carbon matrix to limit expansion of the silicon-based particles, and cycle performance of the battery is poor.

It can be learned from comparison between Examples 5-6 and Examples 7-8 that, the ratio EL:SSA of the mass fraction EL of the first component in the electrolyte solution to the specific surface area SSA of the silicon-carbon composite material is controlled to in a range of 0.014 to 0.2. This helps reduce the internal resistance of the battery, and increase the cycle capacity retention rate of the battery.

It can be learned from Examples 9-12 that, EL:B 1 is further controlled to be in a range of 0.15 to 1.2. This helps further reduce the internal resistance of the battery, and increase the cycle capacity retention rate of the battery.

It can be learned from Examples 13-16 that, EL:V1 is further controlled to be in a range of 20 to 300. This helps further reduce the internal resistance of the battery, and increase the cycle capacity retention rate of the battery.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

**Claims**

**1.** A secondary battery, comprising:

a negative electrode plate, wherein the negative electrode plate comprises a silicon-carbon composite material having a three-dimensional cross-linked pore network structure; and
an electrolyte solution, wherein the electrolyte solution comprises a first component, and the first component comprises one or more of compounds represented by Formula I and Formula II,

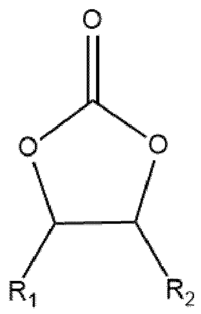 Formula I 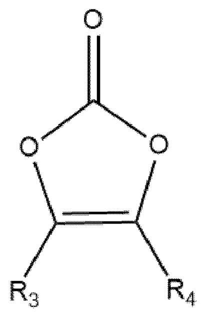 Formula II

$R_1$, $R_2$, $R_3$, and $R_4$ comprising at least one of a hydrogen atom, a fluorine atom, and a fluorine-substituted or fluorine-unsubstituted $C_1$-$C_4$ alkyl group, and Formula I comprising fluorine element.

**2.** The secondary battery according to claim 1, wherein

a specific surface area of the silicon-carbon composite material is SSA $m^2/g$;
a mass fraction of the first component is EL g/g based on a total mass of the electrolyte solution; and
EL:SSA ranges from 0.005 to 0.4, and optionally ranges from 0.014 to 0.2.

**3.** The secondary battery according to claim 1 or 2, wherein

a mass fraction of the first component is EL g/g based on a total mass of the electrolyte solution;

in an outer peripheral region of the silicon-carbon composite material, a mass percentage of silicon element in the silicon-carbon composite material relative to a total mass of the silicon-carbon composite material is B1, wherein the outer peripheral region of the silicon-carbon composite material is a region extending from an outer surface of the silicon-carbon composite material to an inner portion of the silicon-carbon composite material by a distance less than r/2, and r represents a short diameter of the silicon-carbon composite material; and
EL:B1 ranges from 0.01 to 2, and optionally ranges from 0.15 to 1.2.

**4.** The secondary battery according to any one of claims 1 to 3, wherein a total pore volume of pores that are in the silicon-carbon composite material and whose pore sizes are greater than 100 nm is V1 $cm^3/g$, and a ratio EL:V1 of the mass fraction EL of the first component in the electrolyte solution to the total pore volume V1 of the pores that are in the silicon-carbon composite material and whose pore sizes are greater than 100 nm ranges from 10 to 500, and preferably ranges from 20 to 300.

**5.** The secondary battery according to claim 1 or 2, wherein the compound shown in Formula I comprises one or more of the following compounds:

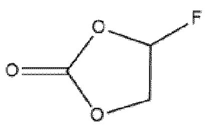, 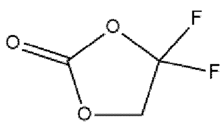, 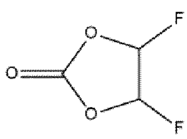, 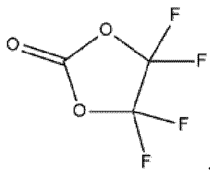,

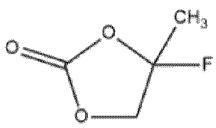, 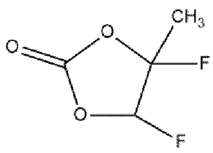, 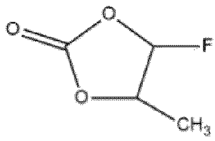, 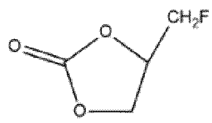,

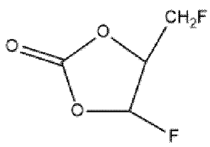, 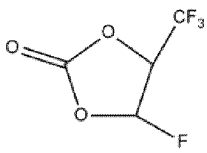, and 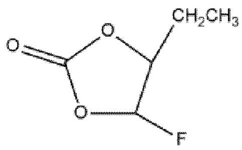;

and
the compound shown in Formula II comprises one or more of the following compounds:

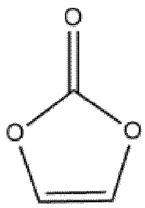, 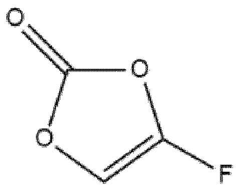, 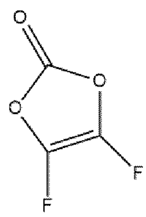, 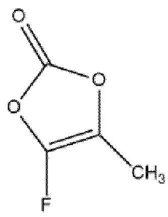, 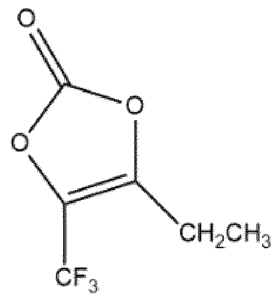,

and

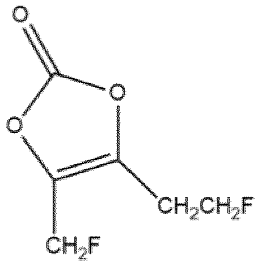

.

6. The secondary battery according to claim 4 or 5, wherein in the outer peripheral region of the silicon-carbon composite material, a mass percentage A1 of carbon element in the silicon-carbon composite material relative to the total mass of the silicon-carbon composite material and the mass percentage B1 of silicon element in the silicon-carbon composite material relative to the total mass of the silicon-carbon composite material satisfy $0.8 \leq B1/A1 \leq 2.5$, and optionally satisfy $1 \leq B1/A1 \leq 1.5$.

7. The secondary battery according to any one of claims 1 to 6, wherein a mass percentage A of carbon element in the silicon-carbon composite material relative to the total mass of the silicon-carbon composite material tends to be decreased in a direction from a geometric center of the silicon-carbon composite material to the outer surface of the silicon-carbon composite material, and a mass percentage B of silicon element in the silicon-carbon composite material relative to the total mass of the silicon-carbon composite material tends to be increased in the direction from the geometric center of the silicon-carbon composite material to the outer surface of the silicon-carbon composite material.

8. The secondary battery according to any one of claims 1 to 7, wherein
the specific surface area SSA of the silicon-carbon composite material satisfies $2\ m^2/g \leq SSA \leq 10\ m^2/g$, and optionally satisfies $3\ m^2/g \leq SSA \leq 7\ m^2/g$.

9. The secondary battery according to any one of claims 1 to 8, wherein the silicon-carbon composite material comprises: a carbon matrix particle, wherein the carbon matrix particle comprises a three-dimensional cross-linked pore network structure; and a silicon nanoparticle, at least partially arranged in the three-dimensional cross-linked pore network structure.

10. The secondary battery according to claim 9, wherein the silicon nanoparticle comprises one or more of a silicon-oxide compound, amorphous silicon, crystalline silicon, and a silicon-carbon composite, and optionally comprises amorphous silicon.

11. The secondary battery according to claim 9 or 10, wherein the carbon matrix particle comprises one or more of graphite, soft carbon, and hard carbon.

12. The secondary battery according to any one of claims 9 to 11, wherein a mass percentage of the silicon nanoparticle in the silicon-carbon composite material is greater than or equal to 40%, and optionally ranges from 40% to 60%.

13. The secondary battery according to any one of claims 1 to 12, wherein a ratio of powder compaction density P11 $g/cm^3$ of the silicon-carbon composite material tested after powder compaction once under an action force of 20000 N to powder compaction density P21 $g/cm^3$ of the silicon-carbon composite material tested after powder compaction for 20 times under the action force of 20000 N satisfies $1.00 < P21/P11 \leq 1.20$, and optionally satisfies $1.02 \leq P21/P11 \leq 1.10$.

14. The secondary battery according to any one of claims 1 to 13, wherein the powder compaction density P11 $g/cm^3$ of the silicon-carbon composite material tested after powder compaction once under the action force of 20000 N satisfies $1.10 \leq P11 \leq 1.40$, and optionally satisfies $1.12 \leq P11 \leq 1.35$.

15. The secondary battery according to any one of claims 1 to 14, wherein the secondary battery comprises at least one of a lithium-ion battery, a sodium-ion battery, a magnesium-ion battery, and a potassium-ion battery.

16. A power consuming apparatus, comprising: the secondary battery according to any one of claims 1 to 15.

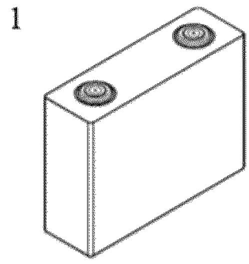


FIG. 1

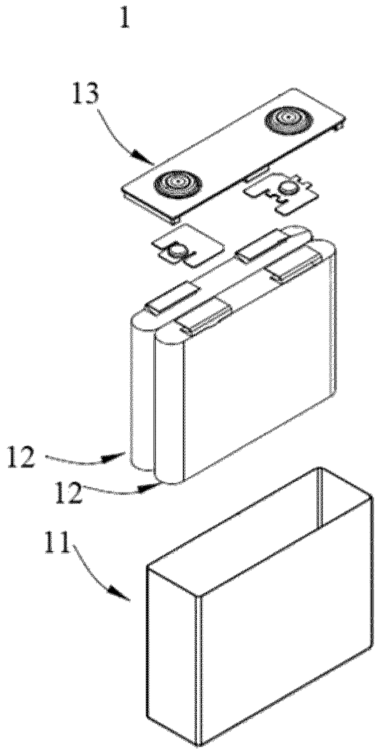


FIG. 2

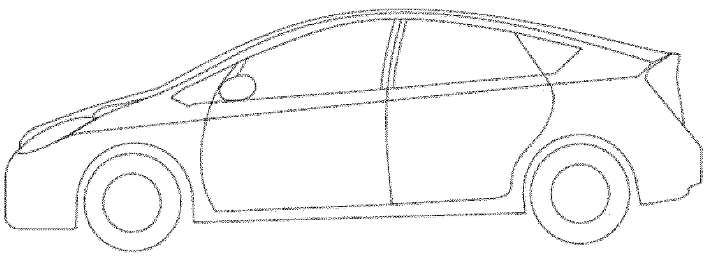

FIG. 3

**INTERNATIONAL SEARCH REPORT**

International application No.
**PCT/CN2023/085695**

**A. CLASSIFICATION OF SUBJECT MATTER**

H01M4/38(2006.01)i; H01M4/48(2010.01)i; H01M4/62(2006.01)i; H01M10/0567(2010.01)i; H01M10/0568(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 负极, 阳极, 碳, 硅, 孔, 交联, 电解液, 氟代碳酸亚乙酯, FEC, 碳酸亚乙烯酯, VC, battery, negative electrode, anode, carbon, silicon, pore, cross-linked, electrolyte, fluoroethylene carbonate, vinylene carbonate

**C. DOCUMENTS CONSIDERED TO BE RELEVANT**

| Category* | Citation of document, with indication, where appropriate, of the relevant passages | Relevant to claim No. |
|---|---|---|
| X | CN 113795945 A (NEXEON LTD.) 14 December 2021 (2021-12-14) description, paragraphs 2, 14-24, 51, 59-100, and 286 | 1-16 |
| X | CN 115244734 A (NEXEON LTD.) 25 October 2022 (2022-10-25) description, paragraphs 2, 14-36, 65, 75-89, 106-107, and 231 | 1-16 |
| Y | CN 115132997 A (OPPO GUANGDONG MOBILE TELECOMMUNICATIONS CORP., LTD. et al.) 30 September 2022 (2022-09-30) description, paragraphs 28-68 and 91, and figures 1-7 | 1-16 |
| Y | CN 102934264 A (NEXEON LTD.) 13 February 2013 (2013-02-13) description, paragraphs 66-82 and 140-158 | 1-16 |
| A | JP 2013222612 A (HITACHI MAXELL LTD.) 28 October 2013 (2013-10-28) entire document | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

**INTERNATIONAL SEARCH REPORT**
**Information on patent family members**

International application No.
**PCT/CN2023/085695**

| Patent document cited in search report | | | Publication date (day/month/year) | Patent family member(s) | | | Publication date (day/month/year) |
|---|---|---|---|---|---|---|---|
| CN | 113795945 | A | 14 December 2021 | WO | 2020234586 | A1 | 26 November 2020 |
| | | | | US | 2022246910 | A1 | 04 August 2022 |
| | | | | EP | 3837729 | A1 | 23 June 2021 |
| | | | | EP | 3837729 | B1 | 01 June 2022 |
| | | | | GB | 201907117 | D0 | 03 July 2019 |
| | | | | GB | 2584615 | A | 16 December 2020 |
| | | | | GB | 2584615 | B | 29 March 2023 |
| | | | | GB | 2584615 | C | 25 October 2023 |
| | | | | JP | 2022533387 | A | 22 July 2022 |
| | | | | KR | 20220009962 | A | 25 January 2022 |
| CN | 115244734 | A | 25 October 2022 | KR | 20230121171 | A | 17 August 2023 |
| | | | | WO | 2022029422 | A1 | 10 February 2022 |
| | | | | EP | 3994745 | A1 | 11 May 2022 |
| | | | | EP | 3994745 | B1 | 07 September 2022 |
| | | | | EP | 4156329 | A1 | 29 March 2023 |
| | | | | KR | 20220156964 | A | 28 November 2022 |
| | | | | KR | 102567178 | B1 | 16 August 2023 |
| | | | | JP | 2023517052 | A | 21 April 2023 |
| | | | | JP | 7323720 | B2 | 08 August 2023 |
| CN | 115132997 | A | 30 September 2022 | | None | | |
| CN | 102934264 | A | 13 February 2013 | GB | 201109537 | D0 | 20 July 2011 |
| | | | | GB | 2481124 | A | 14 December 2011 |
| | | | | GB | 2481124 | B | 13 June 2012 |
| | | | | WO | 2011154692 | A1 | 15 December 2011 |
| | | | | GB | 201009519 | D0 | 21 July 2010 |
| | | | | JP | 2014239055 | A | 18 December 2014 |
| | | | | JP | 6195812 | B2 | 13 September 2017 |
| | | | | EP | 2922119 | A1 | 23 September 2015 |
| | | | | EP | 2922119 | B1 | 22 July 2020 |
| | | | | JP | 2012527740 | A | 08 November 2012 |
| | | | | JP | 5592947 | B2 | 17 September 2014 |
| | | | | RU | 2012122015 | A | 10 December 2013 |
| | | | | RU | 2533650 | C2 | 20 November 2014 |
| | | | | EP | 2430686 | A1 | 21 March 2012 |
| | | | | EP | 2430686 | B1 | 25 February 2015 |
| | | | | US | 2013069601 | A1 | 21 March 2013 |
| | | | | US | 8945774 | B2 | 03 February 2015 |
| | | | | KR | 20120031948 | A | 04 April 2012 |
| | | | | KR | 101219375 | B1 | 10 January 2013 |
| | | | | US | 2015093653 | A1 | 02 April 2015 |
| | | | | US | 9368836 | B2 | 14 June 2016 |
| | | | | CA | 2797208 | A1 | 15 December 2011 |
| | | | | TW | 201208176 | A | 16 February 2012 |
| | | | | TWI | 481093 | B | 11 April 2015 |
| | | | | SG | 181116 | A1 | 28 June 2012 |
| | | | | HK | 1163365 | A0 | 07 September 2012 |
| | | | | SG | 181116 | B | 28 September 2012 |
| | | | | IN | 201205453 | P1 | 07 March 2014 |
| | | | | US | 2015093653 | A1 | 02 April 2015 |
| | | | | US | 9368836 | B | 14 June 2016 |

Form PCT/ISA/210 (patent family annex) (July 2022)

**INTERNATIONAL SEARCH REPORT**
**Information on patent family members**

International application No.
**PCT/CN2023/085695**

| Patent document cited in search report | Publication date (day/month/year) | Patent family member(s) | Publication date (day/month/year) |
|---|---|---|---|
| | | HK 1163365 A1 | 23 October 2015 |
| | | CN 102934264 B | 20 January 2016 |
| JP 2013222612 A | 28 October 2013 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 195872017 T
- GB 195872004 T
- GB 201232006 T
- GB T A
- GB 195872017 A
- GB 2165022008 T
- GB 245332009 T
- GB 173592012 T